# DEMANDE DE BREVET EUROPEEN

(11) **EP 3 429 006 A1**
(43) Date de publication de la demande: **16.01.2019**
(21) Numéro de dépôt: 18182753.6
(22) Date de dépôt: 10.07.2018
(51) Int. Cl.: H01M 8/0202, H01M 8/0221, H01M 8/0228, H01M 8/0256, H01M 8/2418, C25B 9/04, C25B 9/06, H01M 8/0258

(54) **PLAQUE DE MAINTIEN DE CELLULE ELECTROCHIMIQUE A ETANCHEITE AMELIOREE**

(30) Priorité: 13.07.2017 FR 1756688
(71) Demandeur: Commissariat à l'Énergie Atomique et aux Énergies Alternatives, 75015 Paris (FR)
(72) Inventeur: VINCENT, Rémi, 38000 GRENOBLE (FR); CARMINATI, Jean-Noel, 73100 GRESY-SUR-AIX (FR); GARNIER, Laurent, 69970 MARENNES (FR); GERARD, Mathias, 38100 GRENOBLE (FR)
(74) Mandataire: GIE Innovation Competence Group

(57) **Abrégé**

L'invention porte sur une plaque de maintien comportant :
∘ une plaque isolante (21) présentant des structurations formant des canaux de distribution fluidique (22) séparés deux à deux par une paroi longitudinale (23) ;
∘ des portions conductrices de contact (24), s'étendant sur la face d'extrémité (23.1) des parois longitudinales (23) ;
∘ au moins une piste conductrice de polarisation (25), s'étendant sur la face externe de la plaque isolante ;
∘ des orifices traversants (26) s'étendant dans les parois longitudinales (23), et des connecteurs électriques (27) s'étendant dans les orifices traversants (26) et reliant chacun une desdites portions conductrices de contact (24) à la piste conductrice de polarisation (25) ;
∘ la plaque isolante (21) étant réalisée en un matériau inactif vis-à-vis d'un milieu aqueux

∘ les orifices traversants (26) forment chacun un volume délimité par une face intérieure de la partie isolante, les connecteurs électriques (27) étant au contact de la face intérieure, une portion d'étanchéité (28) étant disposée dans les orifices traversants (26) de manière à les obturer de manière hermétique, le matériau de la portion d'étanchéité (28) étant en un matériau d'étanchéité inactif vis-à-vis du milieu aqueux

## Description

### DOMAINE TECHNIQUE

Le domaine de l'invention est celui des générateurs électrochimiques comportant au moins une cellule électrochimique à assemblage membrane électrodes, tels que les piles à combustible et les électrolyseurs. L'invention porte plus particulièrement sur les plaques de maintien d'un tel générateur électrochimique.

### ÉTAT DE LA TECHNIQUE ANTÉRIEURE

Un générateur électrochimique tel qu'une pile à combustible ou un électrolyseur, comporte habituellement au moins une cellule électrochimique dont l'anode et la cathode sont séparées électriquement l'une de l'autre par une membrane électrolytique, la cellule étant le lieu de réactions électrochimiques entre des réactifs introduits de manière continue. L'empilement des électrodes et de la membrane électrolytique est appelé assemblage membrane électrodes (AME).

D'une manière générale, dans le cas d'une pile à combustible, le combustible (par exemple de l'hydrogène) est apporté jusqu'à l'anode alors que le comburant (par exemple de l'oxygène contenu dans l'air) est amené à la cathode. La réaction électrochimique est subdivisée en deux demi-réactions, une réaction d'oxydation et une réaction de réduction, qui ont lieu respectivement à l'interface anode /électrolyte et à l'interface cathode/électrolyte. Pour avoir lieu, la réaction électrochimique requiert la présence d'un conducteur ionique entre les deux électrodes, à savoir l'électrolyte contenu dans une membrane polymère, et un conducteur électronique formé par le circuit électrique externe. La cellule est ainsi le lieu de la réaction électrochimique : les réactifs y sont apportés, les produits et les espèces non réactives en sont évacués, tout comme la chaleur produite lors de la réaction.

Dans le cas d'un électrolyseur adapté à la production d'hydrogène et d'oxygène, de l'eau est amenée au contact de l'anode et une différence de potentiel est appliquée aux électrodes de la cellule électrochimique. L'anode réalise alors l'oxydation de l'eau qui produit de l'oxygène et des protons. Ces derniers migrent au travers de la membrane électrolytique jusqu'à la cathode où est réalisée une réduction des protons, produisant ainsi de l'hydrogène.

La cellule électrochimique comporte habituellement deux plaques de maintien, entre lesquelles est disposé l'assemblage membrane électrodes. Les plaques de maintien, appelées plaques bipolaires dans le cas d'un empilement de cellules électrochimiques, sont adaptées à assurer le maintien mécanique de l'assemblage membrane électrodes, la distribution fluidique des réactifs au niveau des électrodes, et la connexion électrique de ces dernières.

Ces plaques de maintien peuvent être réalisées à partir de la technologie des circuits imprimés (PCB, pour *Printed Circuit Board,* en anglais). Ainsi, le document US2005/0202297 décrit des plaques de maintien de type PCB d'une cellule électrochimique. Chaque plaque de maintien comprend une plaque isolante, réalisée en un matériau électriquement isolant, dont une face interne présente des structurations formant les canaux de distribution fluidique. Des bandes électriquement conductrices sont disposées sur la face interne, le long de parois longitudinales qui séparent les canaux de distribution deux à deux, de manière à être au contact de l'assemblage membrane électrode et permettre la polarisation électrique des électrodes. Les bandes conductrices sont reliées à des portions conductrices dont une partie est en saillie hors de la cellule électrochimique, permettant ainsi la connexion électrique des électrodes au circuit électrique externe.

### EXPOSÉ DE L'INVENTION

L'invention a pour objectif de remédier au moins en partie aux inconvénients de l'art antérieur, et plus particulièrement de proposer une plaque de maintien de cellule électrochimique présentant des performances électriques et une étanchéité améliorées.

Pour cela, l'objet de l'invention est une plaque de maintien pour une cellule électrochimique comportant au moins un assemblage membrane électrodes formé d'une anode et d'une cathode séparées l'une de l'autre par une membrane électrolytique, la plaque de maintien comportant : une plaque isolante, réalisée en un matériau électriquement isolant, présentant une face interne destinée à être orientée vers l'assemblage membrane électrodes, et une face externe opposée, la face interne présentant des structurations formant des canaux de distribution fluidique séparés deux à deux par une paroi longitudinale, les parois longitudinales présentant chacune une face d'extrémité destinée à venir au contact de l'assemblage membrane électrodes ; des portions conductrices de contact, réalisées en un matériau électriquement conducteur, s'étendant sur la face d'extrémité des parois longitudinales ; au moins une piste conductrice de polarisation, réalisée en un matériau électriquement conducteur, s'étendant sur la face externe de la plaque isolante.

Selon l'invention, la plaque de maintien comporte des orifices traversants s'étendant dans les parois longitudinales et débouchant sur la face d'extrémité, et des connecteurs électriques s'étendant dans les orifices traversants et reliant chacun une desdites portions conductrices de contact à la piste conductrice de polarisation ; la plaque isolante étant réalisée en un matériau inactif vis-à-vis d'un milieu aqueux.

De plus, les orifices traversants forment chacun un volume délimité par une face intérieure de la partie isolante, les connecteurs électriques étant au contact de la face intérieure, une portion d'étanchéité étant disposée dans les orifices traversants de manière à les obturer de manière hermétique, le matériau de la portion d'étanchéité étant en un matériau d'étanchéité inactif vis-à-vis du milieu aqueux

Certains aspects préférés, mais non limitatifs de cette plaque de maintien sont les suivants.

la plaque isolante peut être réalisée en un matériau choisi parmi le polyimide, les polymères fluorés, le poly(naphtalate d'éthylène) (PEN) et le poly(téréphtalate d'éthylène) (PET).

La plaque isolante peut être réalisée en un matériau choisi parmi le polyimide, le polytétrafluoroéthylène (PTFE), l'éthylène tétrafluoroéthylène (ETFE), l'éthylène propylène fluoré (FEP), le poly(fluorure de vinylidène) (PVDF).

Des parties supérieures en un matériau d'étanchéité inactif vis-à-vis du milieu aqueux peuvent être disposées sur la face externe de manière à recouvrir chacun un orifice traversant.

Le matériau d'étanchéité peut être choisi parmi un polyuréthane et les polymères fluorés.

Le matériau d'étanchéité peut être choisi parmi un polyuréthane, le polytétrafluoroéthylène (PTFE), l'éthylène tétrafluoroéthylène (ETFE), l'éthylène propylène fluoré (FEP), le poly(fluorure de vinylidène) (PVDF).

Les portions conductrices de contact situées sur la face d'extrémité d'une même paroi longitudinale peuvent être des portions distinctes les unes des autres.

Les portions conductrices de contact d'une même paroi longitudinale peuvent présenter une largeur, suivant un axe transversal à l'axe longitudinal de la paroi longitudinale, inférieure à la largeur de la paroi longitudinale.

Le matériau des conducteurs électriques peut présenter une conductivité thermique supérieure ou égale à 390W/m.K, et la densité surfacique des connecteurs électriques peut être comprise entre 1% et 10% de la surface de la membrane électrolytique.

L'invention porte également sur une cellule électrochimique comportant un assemblage formé d'une anode et d'une cathode séparées l'une de l'autre par une membrane électrolytique, et deux plaques de maintien, dites anodique et cathodique, selon l'une quelconque des caractéristiques précédentes, la plaque de maintien anodique étant au contact électrique de l'anode et la plaque de maintien cathodique étant au contact de la cathode.

L'invention porte également sur un générateur électrochimique comportant une pluralité de cellules électrochimiques selon la caractéristique précédente, la même membrane électrolytique étant commune aux assemblages membrane électrodes des cellules électrochimiques, ces dernières étant adjacentes les unes aux autres dans le plan de la membrane électrolytique, les plaques de maintien anodiques comportant la même plaque isolante et les plaques de maintien cathodiques comportant la même plaque isolante.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue en coupe transversale, schématique et partielle, d'une cellule électrochimique selon un mode de réalisation, dans lequel les plaques de maintien sont de type circuit imprimé et présentent des performances électriques et une étanchéité améliorées ;
les figures 2A et 2B des vues en coupe transversale, schématiques et partielles, de variantes de la cellule électrochimique illustrée sur la fig.1, dans lequel les plaques de maintien présentent une étanchéité améliorée ;
les figures 3A à 3E sont des vues en coupe transversale, schématiques et partielles, illustrant différentes étapes d'un procédé de réalisation d'une cellule électrochimique telle qu'illustrée sur la fig.2A ;
la figure 4 est une vue en coupe transversale, schématique et partielle, d'un générateur électrochimique selon un mode de réalisation, comportant une pluralité de cellules électrochimiques agencées de manière adjacente les unes aux autres dans le plan de la membrane électrolytique, dont les plaques de maintien anodiques, respectivement cathodiques, partagent la même plaque isolante.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur une plaque de maintien de cellule électrochimique, ainsi que sur une cellule électrochimique comportant de telles plaques de maintien et sur un générateur électrochimique comportant au moins une cellule électrochimique. On décrira différents modes de réalisation et variantes en référence à une pile à combustible, et en particulier à une pile à combustible de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques, par exemple les électrolyseurs générant de l'hydrogène et de l'oxygène à partir d'eau.

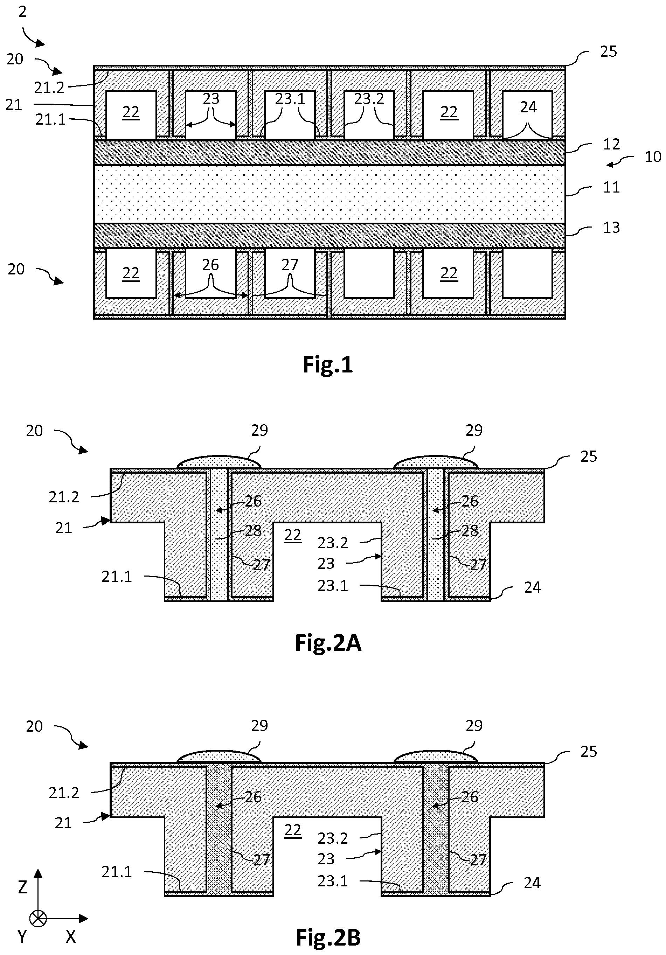

La figure 1 est une vue en coupe, schématique et partielle, d'une cellule électrochimique 2 selon un mode de réalisation, comportant des plaques de maintien 20 de type PCB.

On définit ici et pour la suite de la description un repère direct tridimensionnel orthogonal (X,Y,Z), où les axes X et Y forment un plan parallèle au plan principal de la cellule électrochimique 2, et où l'axe Z est orienté suivant l'épaisseur de la cellule.

La cellule électrochimique 2 comporte un assemblage membrane électrodes 10 formé d'une anode 12 et d'une cathode 13 séparées l'une de l'autre par une membrane électrolytique 11. L'assemblage membrane électrodes 10 est disposé entre des plaques de maintien 20 adaptées à amener des espèces réactives aux électrodes 12, 13 et à assurer la connexion électrique de celles-ci. Elles sont également adaptées à évacuer la chaleur produite lors de la réaction électrochimique.

Chaque électrode 12, 13 comporte une couche de diffusion (GDL, pour *Gas Diffusion Layer,* en anglais) et une couche active située entre la membrane électrolytique 11 et la couche de diffusion. Les couches actives sont le lieu des réactions électrochimiques. Elles comportent des matériaux permettant les réactions d'oxydation et de réduction aux interfaces respectives de l'anode 12 et la cathode 13 avec la membrane 11. Les couches de diffusion sont réalisées en un matériau poreux autorisant la diffusion des espèces réactives entre les circuits de distribution des plaques de maintien 20 et les couches actives, ainsi que la diffusion des produits issus de la réaction électrochimique.

La membrane électrolytique 11 est ici une membrane échangeuse de protons. Elle permet la diffusion de protons d'une anode 12 jusqu'à une cathode 13, l'anode 12 et la cathode 13 étant en regard l'une de l'autre, les protons pouvant se présenter au sein de la membrane sous la forme d'ions H₃O⁺. Elle assure également l'isolation électrique entre l'anode 12 et la cathode 13.

Chaque plaque de maintien 20 est du type circuit imprimé (PCB), c'est-à-dire qu'elle comporte une plaque isolante 21 réalisée en un matériau électriquement isolant, sur et dans laquelle s'étendent des éléments de connexion électrique.

La plaque isolante 21 est une plaque rigide, éventuellement flexible, réalisée en un matériau électriquement isolant. Elle présente une face interne 21.1 et une face externe 21.2 opposées l'une à l'autre. La face interne 21.1 est orientée vers l'assemblage membrane électrodes 10 et est en contact électrique avec l'une des électrodes 12, 13. La plaque isolante 21 présente une épaisseur maximale qui peut être de l'ordre de quelques millimètres, par exemple comprise entre 1mm et 6mm, de préférence égale à 2mm. Le matériau isolant est en outre inactif vis-à-vis d'un milieu aqueux, c'est-à-dire inactif vis-à-vis de l'humidité. Il est ainsi chimiquement inerte vis-à-vis d'un milieu liquide aqueux ou d'un milieu gazeux dont l'humidité relative est non nulle, c'est-à-dire un milieu gazeux contenant de la vapeur d'eau. Par matériau inactif vis-à-vis d'un milieu aqueux, on entend un matériau résistant à l'hydrolyse, c'est-à-dire peu voire pas sensible à l'hydrolyse. Le matériau peut ainsi être un polymère ne présentant pas de groupe amide (R-C(=O)NH-R'), ni, de préférence, de groupe ester (R-C(=O)O-R'). Il peut être un polymère choisi parmi le polyimide et un polymère fluoré tel que le polytétrafluoroéthylène (PTFE), l'éthylène tétrafluoroéthylène (ETFE), l'éthylène propylène fluoré (FEP), le poly(fluorure de vinylidène) (PVDF), entre autres. Les polymères tels que le poly(naphtalate d'éthylène) (PEN) et le poly(téréphtalate d'éthylène) (PET), bien que comportant un groupe ester, peuvent également convenir, mais restent moins performants que le polyimide et les fluoropolymères. Un procédé d'évaluation de la résistance à l'hydrolyse d'un matériau peut consister à immerger le matériau dans de l'eau à 80°C pendant 500h, puis à mesurer au moins l'une de ses caractéristiques mécaniques. Un matériau est qualifié de résistant à l'hydrolyse lorsque la valeur de la caractéristique mécanique mesurée, par exemple le module d'Young, n'a pas diminué de plus de 10%.

Des circuits de distribution fluidique sont formés par structuration des plaques de maintien 20 au niveau de leurs faces internes 21.1. Cette structuration de la face interne 21.1 définit des canaux de distribution fluidique 22, adaptés à amener et évacuer des fluides vers et à partir des électrodes. Ces canaux de distribution 22 présentent une forme d'échancrures pratiquées dans la plaque isolante 21 à partir de la face interne 21.1. Les canaux de distribution 22 sont séparés deux à deux par une paroi longitudinale 23. Les parois longitudinales 23 sont délimitées par des faces latérales 23.2 opposées l'une à l'autre et par une face d'extrémité 23.1. Les parois longitudinales 23 sont au contact de l'assemblage membrane électrodes 10 au niveau des faces d'extrémité 23.1.

Des portions conductrices de contact 24 sont disposées au niveau des faces d'extrémité 23.1 des parois longitudinales 23. Ces portions conductrices de contact 24 sont réalisées en un matériau électriquement conducteur, et sont adaptées à assurer la connexion électrique de l'électrode avec un circuit électrique externe. Les portions conductrices de contact 24 sont ainsi en contact électrique avec l'électrode correspondante. Dans cet exemple, la face d'extrémité est au moins partiellement revêtue par les portions conductrices de contact 24, et les faces latérales qui délimitent transversalement les canaux de distribution 22 ne sont sensiblement pas revêtues par les portions conductrices de contact 24. Les portions conductrices de contact 24 s'étendant sur la face d'extrémité d'une même paroi longitudinale 23 peuvent être jointes les unes aux autres et former une bande continue conductrice, ou être disjointes les unes des autres et former des plots conducteurs distincts. Les portions conductrices de contact 24 peuvent présenter une épaisseur de l'ordre de quelques dizaines à quelques centaines de microns, par exemple comprise entre 10µm et 500µm, de préférence égale à 70µm. Elles peuvent être réalisées en un matériau choisi parmi le cuivre, l'or, l'or nickel, le chrome, le tungstène de titane, ou tout autre matériau électriquement conducteur adapté.

Au moins une piste conductrice de polarisation 25 s'étend sur la face externe de la plaque isolante 21. Elle est reliée électriquement aux portions conductrices de contact 24, et assure la connexion de ceux-ci au circuit électrique externe du générateur électrochimique. La piste conductrice de polarisation 25 peut présenter une épaisseur de l'ordre de quelques dizaines à quelques centaines de microns, par exemple comprise entre 10µm et 500µm, de préférence égale à 70µm. Elles peuvent être réalisées en un matériau choisi parmi le cuivre, l'or, l'or nickel, le chrome, le tungstène de titane, ou tout autre matériau électriquement conducteur adapté.

La plaque isolante 21 comporte des orifices traversants 26 qui s'étendent de la face externe 21.2 jusqu'à la face interne 21.1, et plus précisément jusqu'aux faces d'extrémité 23.1 des parois longitudinales 23, suivant l'axe Z. Les orifices traversants 26 s'étendent ainsi dans les parois longitudinales 23 et débouchent sur les faces d'extrémité 23.1. Ils comportent des connecteurs électriques 27, sous la forme d'une couche en un matériau électriquement conducteur, qui relient la piste conductrice de polarisation 25 aux portions conductrices de contact 24. Les orifices traversants 26 associés aux connecteurs électriques 27 forment ainsi des vias conducteurs. Les orifices traversants 26 peuvent présenter un diamètre de l'ordre de quelques dizaines à quelques centaines de microns, par exemple compris entre 50µm et 500µm. Ils présentent de préférence une forme de trous plutôt qu'une forme de tranchées, dans le sens où les dimensions transversales dans le plan XY sont du même ordre de grandeur. Les connecteurs électriques 27 peuvent présenter une épaisseur, dans le plan XY, de l'ordre de quelques dizaines à quelques centaines de microns, par exemple comprise entre 10µm et 100µm, et de préférence égal à 70µm. Ils peuvent être réalisés en un matériau choisi parmi le cuivre, l'or, l'or nickel, le chrome, le tungstène de titane, ou tout autre matériau électriquement conducteur adapté. Ainsi, les orifices traversants 26 sont de préférence obturés par les connecteurs électriques 27. Cependant, dans le cas où les orifices traversants 26 ne sont pas obturés par les connecteurs électriques 27, comme décrit plus loin, un matériau d'étanchéité 28 peut être déposé, à partir de la face externe 21.2, dans les orifices traversants 26 de manière à les obturer de manière hermétique.

Le générateur électrochimique comporte un circuit électrique externe (non représenté) qui relie électriquement les pistes conductrices de polarisation 25 à une charge électrique lorsque le générateur est une pile à combustible, ou à une source de tension lorsque le générateur est un électrolyseur. La charge électrique est adaptée à recevoir le courant électrique généré à l'anode 12 par la réaction d'oxydation de l'hydrogène. Ainsi, une différence de potentiel électrique est appliquée aux bornes de la charge électrique, où le potentiel appliqué par la cathode 13 est supérieur à celui appliqué par l'anode 12. La tension appliquée par la cellule électrochimique 2 à la charge électrique peut être de l'ordre de 0,7V. Dans le cas d'un électrolyseur, la source de tension est connectée électriquement aux électrodes de la cellule électrochimique 2, et est adaptée à appliquer une différence de potentiel électrique continue entre l'anode 12 et la cathode 13. La tension électrique appliquée est positive, dans le sens où le potentiel électrique imposé à l'anode 12 est supérieur à celui imposé à la cathode 13. Elle peut être comprise entre 1,3V et 3V, par exemple égale à 1,8V environ, pour une densité de courant comprise entre 50mA/cm² et 4A/cm² environ. L'application de la tension électrique permet ainsi d'assurer l'oxydation de l'eau à l'anode 12, la circulation des électrons dans le circuit électrique jusqu'à la cathode 13, et la réduction des protons à la cathode 13.

A la différence des plaques de maintien 20 décrites dans l'exemple de l'art antérieur mentionné précédemment, les portions conductrices de contact 24 sont directement connectées à la piste conductrice de polarisation 25 par les vias conducteurs 26, 27 situés dans les parois longitudinales 23, et non pas par des vias conducteurs déportés et situés hors de la zone active de l'assemblage membrane électrodes 10. Ce positionnement des vias conducteurs 26, 27 dans les parois longitudinales 23 permet d'assurer une meilleure homogénéité spatiale des propriétés électriques de la plaque de maintien 20, dans le sens où chaque portion conductrice de contact 24 est reliée de la même manière à la piste conductrice de polarisation 25. La résistance électrique d'accès aux portions conductrices de contact 24 est ainsi sensiblement homogène.

De plus, il est possible de réaliser les portions conductrices de contact 24 sous la forme de plots distincts les uns des autres, chaque plot 24 étant relié à une piste conductrice de polarisation 25 par un via conducteur 26, 27. Ainsi, les portions conductrices de contact 24 d'une même paroi longitudinale 23 ne forment plus une bande continue, mais des plots disjoints les uns des autres. Cela permet d'assurer un meilleur contact mécanique, et une meilleure pénétration, des plots conducteurs de contact 24 avec la couche de diffusion, diminuant ainsi la résistance électrique de contact. Les performances électriques de la cellule électrochimique 2 sont alors améliorées.

Cependant, les inventeurs ont mis en évidence que l'étanchéité de la plaque de maintien 20, lorsque le matériau de la plaque isolante 21 est un matériau classiquement utilisé, à savoir une résine époxy telle que du FR4 (résine époxy renforcée de fibres de verre), peut être dégradée dans les conditions opératoires d'une pile à combustible ou d'un électrolyseur. C'est le cas en particulier à la cathode 13 d'une pile à combustible où l'humidité relative est importante du fait de la formation d'eau liquide, et du fait de la polarisation électrique des vias conducteurs 26, 27.

En effet, le matériau polymère isolant qu'est la résine époxy tend à s'hydrolyser lors du fonctionnement du générateur électrochimique, en particulier le long des vias conducteurs 26, 27. L'hydrolyse est, d'une manière générale, une réaction chimique dans laquelle l'eau joue le rôle d'un réactif brisant une liaison chimique. Ainsi, la résine époxy est localement dégradée par l'action de l'eau, en particulier le long des vias conducteurs 26, 27 : les macromolécules du polymère contenant des groupes époxydes se dissocient pour former de nouvelles molécules avec les molécules d'eau. Cette rupture hydrolytique des chaînes polymères de la résine époxy se traduit par une dégradation structurelle de la plaque de maintien 20, qui est susceptible de provoquer une rupture d'étanchéité.

Pour assurer une bonne herméticité de la plaque de maintien 20 au niveau des vias conducteurs 26, 27, le matériau de la plaque isolant est un matériau inactif vis-à-vis d'un milieu aqueux présent à l'anode 12 ou à la cathode 13. Comme mentionné précédemment, le matériau de la plaque isolante 21 est résistant à l'hydrolyse, c'est-à-dire que les molécules d'eau du milieu aqueux ne réagissent pas avec celles du matériau de la plaque isolant. En d'autres termes, le matériau de la plaque isolante 21 est chimiquement inerte vis-à-vis de l'eau présente dans le milieu aqueux liquide ou gazeux. Le matériau peut ainsi être un polymère ne présentant pas de groupe amide, ni, de préférence, de groupe ester. Le matériau peut être un polymère choisi parmi le polyimide et un polymère fluoré, tel que le polytétrafluoroéthylène (PTFE), l'éthylène tétrafluoroéthylène (ETFE), l'éthylène propylène fluoré (FEP), le poly(fluorure de vinylidène) (PVDF), entre autres. Les polymères tels que le poly(naphtalate d'éthylène) (PEN) et le poly(téréphtalate d'éthylène) (PET) peuvent néanmoins convenir.

Les figures 2A et 2B sont des vues en coupe transversale, schématiques et partielles, de variantes de la plaque de maintien 20 illustrée sur la figure 1, dans lesquelles l'étanchéité est améliorée par la présence d'une portion d'étanchéité 28 obturant les orifices traversants 26 au niveau de la face externe 21.2.

En référence à la figure 2A, la plaque de maintien 20 se distingue de celles illustrées sur la figure 1 en ce que le matériau des connecteurs électriques 27 ne remplit pas entièrement le volume des orifices traversants 26. Les connecteurs électriques 27 s'étendent entre la face externe 21.2 et la face d'extrémité 23.1, et revêtent la face intérieure 23.2 des orifices traversants 26. Cependant, leur épaisseur n'est pas suffisante pour remplir le volume des orifices traversants 26 et ainsi ne permet pas d'obturer ces derniers de manière hermétique. A titre d'exemple, les orifices traversants 26 peuvent présenter un diamètre moyen de l'ordre de 400 µm et l'épaisseur de la couche formant un connecteur électrique peut être de l'ordre de 70µm.

Une portion d'étanchéité 28 est disposée à l'intérieur des orifices traversants 26 de manière à remplir le volume resté libre à la suite de la formation des connecteurs électriques 27. La portion d'étanchéité 28 s'étend de préférence entre la face externe 21.2 et la face d'extrémité 23.1, et remplit entièrement l'orifice traversant 26 correspondant. Elle est réalisée en un matériau inactif vis-à-vis de l'eau du milieu aqueux, dans le sens où il est résistant à l'hydrolyse. Il peut être un polymère ne comportant pas de groupe amide, ni, de préférence, de groupe ester. Il peut en particulier être choisi parmi le polyuréthane et un polymère fluoré tel que le polyfluorure de vinylidène (PVDF), le polytétrafluoroéthylène (PTFE), l'éthylène tétrafluoroéthylène (ETFE), l'éthylène propylène fluoré (FEP), entre autres.

De préférence, la portion d'étanchéité 28 présente, pour chaque orifice traversant 26, une partie supérieure 29 qui s'étend sur la face externe 21.2 et présente une dimension latérale, dans le plan XY, supérieure à celle de l'orifice traversant 26. Ainsi, la partie supérieure 29 forme un capot qui s'étend sur l'ouverture supérieure de l'orifice traversant 26 ainsi que sur la bordure de la face externe 21.2 qui entoure cette ouverture. Elle permet ainsi d'améliorer l'herméticité de la plaque de maintien 20 dans le cas où il y aurait une rupture d'étanchéité non désirée au niveau du via conducteur 26, 27.

En référence à la figure 2B, la plaque de maintien 20 se distingue de celle illustrée sur la figure 2A en ce que le matériau des connecteurs électriques 27 remplit entièrement le volume des orifices traversants 26. Il s'étend ainsi continûment entre la face externe 21.2 et la face d'extrémité 23.1, et remplit le volume de l'orifice traversant 26 correspondant. Ainsi, chaque orifice traversant 26 est obturé par le matériau conducteur du connecteur électrique 27 correspondant. Cependant, pour limiter les risques de rupture d'étanchéité, une partie supérieure 29 d'un matériau d'étanchéité est disposée sur chaque orifice traversant 26 au niveau de la face externe 21.2, de manière à assurer un capot améliorant encore l'herméticité de la plaque de maintien 20. Comme dans la figure 2A, la partie supérieure 29 du matériau d'étanchéité s'étend sur la bordure de l'orifice traversant 26 qui entoure l'ouverture de ce dernier au niveau de la face externe 21.2, ainsi que sur l'orifice traversant 26. Il est inactif vis-à-vis de l'eau du milieu aqueux, peut ainsi être un polymère ne présentant pas de groupe amide, ni, de préférence, de groupe ester. De préférence il est un polymère choisi parmi le polyuréthane et un polymère fluoré tel que le polyfluorure de vinylidène (PVDF), le polytétrafluoroéthylène (PTFE), l'éthylène tétrafluoroéthylène (ETFE), l'éthylène propylène fluoré (FEP), entre autres.

La plaque de maintien 20 selon la variante de la fig.2A est avantageuse par rapport à celle de la fig.2B dans la mesure où il est possible de réaliser des orifices traversants 26 de plus grand diamètre moyen. A titre d'exemple, le diamètre moyen peut être compris entre 300µm à 1mm environ dans le cas de la fig.2A, de préférence de l'ordre de 500µm, alors qu'il est de l'ordre de 250µm au maximum dans le cas de la fig.2B. Les orifices traversants de grand diamètre peuvent alors être réalisés de manière plus simple et rapide que des orifices de petit diamètre, ce qui simplifie le procédé de fabrication. De plus, dans le cas de la fig.2A, la section droite des connecteurs électriques est plus importante que celle des connecteurs 27 de la fig.2B, ce qui permet d'améliorer la connexion électrique avec l'électrode correspondante.

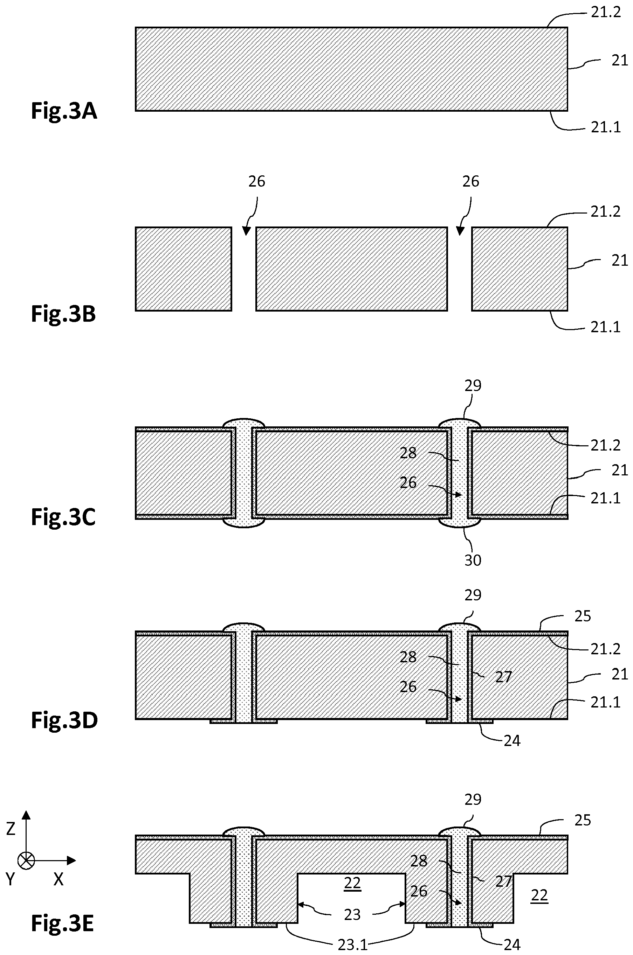

Les figures 3A à 3E sont des vues en coupe, schématiques et partielles, illustrant différentes étapes d'un exemple de procédé de fabrication d'une plaque de maintien 20 telle qu'illustrée sur la figure 2A.

On fournit tout d'abord (fig.3A) une plaque isolante 21 en un matériau électriquement isolant et inactif vis-à-vis de l'eau. Ce matériau peut être du polyimide ou du PTFE. A titre d'exemple, la plaque isolante 21 peut présenter une épaisseur comprise entre 1mm et 6mm environ, par exemple égale à 2mm environ.

On réalise ensuite (fig.3B) un ensemble d'orifices traversants 26 dans des zones destinées à devenir des parois longitudinales 23, entre la face externe 21.2 et la face interne 21.1. Ces orifices traversants 26 présentent de préférence une forme de trous et non pas de tranchées, dans le sens où la dimension de chaque orifice traversant 26 suivant l'axe X et du même ordre de grandeur que la dimension suivant l'axe Y. A titre d'exemple, les orifices traversants 26 présentent une dimension transversale moyenne égale à 400µm environ. Chaque orifice traversant 26 présente ici une dimension transversale sensiblement constante suivant l'axe Z, mais d'autres formes sont possibles. Ainsi, ils peuvent présenter une forme tronconique où la dimension transversale diminue en allant vers la face interne 21.1 de la plaque isolante 21.

On réalise ensuite (fig.3C) un dépôt d'un matériau électriquement conducteur, par exemple du cuivre, sur la face externe 21.2 dans le but de former la piste conductrice de polarisation 25, sur la face intérieure des orifices 26 pour former les connecteurs électriques 27 et, et sur la face interne 21.1 pour former ensuite les portions conductrices de contact 24. Le dépôt du matériau conducteur peut être effectué par électrodéposition, mais d'autres techniques sont possibles (évaporation, pulvérisation...), notamment en fonction de la forme des orifices traversants 26. Une fine couche d'amorce peut avoir été préalablement déposée de manière à améliorer l'adhésion du matériau conducteur sur la plaque isolante 21. A titre d'exemple, la couche de cuivre peut présenter une épaisseur de 70µm environ.

Dans cet exemple, le matériau des connecteurs électriques 27 ne remplit pas totalement les orifices traversants 26. Une portion d'étanchéité 28, par exemple en PFTE, est alors déposée pour obturer les orifices traversants 26 et assurer l'étanchéité de la plaque de maintien 20. Pour cela, le matériau d'étanchéité est déposé de manière à remplir totalement chacun des orifices traversants 26. Lors de cette étape, le matériau forme une portion supérieure 29 sur la face externe 21.2 et une portion inférieure 30 sur la face interne 21.1, qui s'étendent toutes deux en outre sur les bordures de l'orifice traversant 26.

On structure ensuite (fig.3D) la couche conductrice déposée pour former la piste conductrice de polarisation 25 sur la face externe 21.2, et pour former les portions conductrices de contact 24 sur la face interne 21.1. Les portions conductrices de contact 24 sont ici des plots distincts les uns des autres et positionnés à l'ouverture inférieure des orifices traversants 26. On supprime également la portion inférieure 30 du matériau d'étanchéité.

On réalise ensuite (fig.3E) les canaux de distribution 22, en pratiquant des évidements à partir de la face interne 21.1 de la plaque isolante 21 de manière localisée. Ainsi, les échancrures forment des canaux de distribution 22 séparés deux à deux par une paroi longitudinale 23. Les canaux 22 sont de préférence parallèles les uns aux autres et peuvent s'étendre longitudinalement de manière rectiligne ou ondulée. Dans cet exemple, la largeur des portions conductrices de contact 24 est avantageusement inférieure à celle de la paroi longitudinale 23, de manière à faciliter la pénétration des portions conductrices de contact 24 dans la couche de diffusion de l'électrode correspondante et ainsi diminuer la résistance électrique de contact.

Dans le but d'avoir une plaque de maintien 20 dont la conductivité thermique est comparable à celle des plaques bipolaires en tôle métallique emboutie qui est classiquement de l'ordre de 26W/m.K, la plaque de maintien 20 présente une densité surfacique de vias conducteurs 26, 27 avantageusement comprise entre 1% et 10%, dans le cas où le matériau conducteur des connecteurs électriques 27 est du cuivre ou un matériau conducteur d'une conductivité thermique similaire à celle du cuivre, à savoir une conductivité thermique supérieure ou égale à 390W/m.K.

Pour augmenter la conductivité thermique globale de la plaque de maintien 20, des vias conducteurs 26, 27 peuvent en outre être positionnés sur le pourtour de la zone chimiquement active de l'assemblage membrane électrodes 10, de manière à relier une piste conductrice périphérique inférieure située sur la face interne 21.1 à une piste conductrice périphérique supérieure située sur la face externe 21.2.

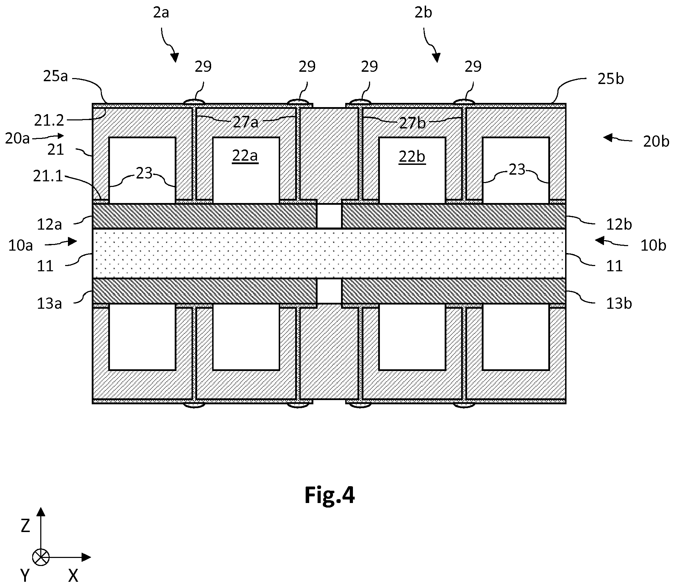

La figure 4 est une vue en coupe, schématique et partielle, d'une générateur électrochimique 1, ici une pile à combustible, comportant plusieurs cellules électrochimiques 2a, 2b agencées de manière adjacente les unes aux autres dans le plan d'une même membrane électrolytique 11 commune aux cellules électrochimiques.

Chaque cellule électrochimique 2a, 2b comporte ainsi un assemblage membrane électrodes 10a, 10b formé d'une anode 12a, 12b et d'une cathode 13a, 13b séparées l'une de l'autre par une membrane électrochimique 11. Les assemblages 10a, 10b sont adjacents les uns aux autres dans le plan XY et partagent la même membrane électrolytique 11. Les anodes 12a, 12b et les cathodes 13a, 13b des cellules électrochimiques sont distinctes et ainsi isolées électriquement les unes des autres par la membrane électrolytique 11, dans la mesure où la membrane électrolytique 11 est conductrice de protons, mais isolante vis-à-vis des électrons. Un espace d'isolation électrique est prévu entre les anodes 12a, 12b d'une part et entre les cathodes 13a, 13b d'autre part, cet espace pouvant être rempli par un matériau diélectrique.

Chaque cellule électrochimique 2a, 2b comporte en outre des plaques de maintien 20a, 20b qui enserrent l'assemblage membrane électrodes 10a, 10b correspondant. Les plaques de maintien 20a, 20b anodiques, respectivement cathodiques, partagent la même plaque isolante 21. Ainsi, les plaques de maintien 20a, 20b anodiques, respectivement cathodiques, sont adjacentes les unes aux autres dans le plan XY, et assemblées mécaniquement les unes aux autres par la même plaque isolante 21 qu'elles partagent, mais restent électriquement indépendantes les unes des autres.

En référence aux plaques de maintien 20a, 20b anodiques (les plaques de maintien 20 cathodiques sont ici identiques), la partie isolante 21 présente une face externe 21.2 et une face interne 21.1 opposée l'une à l'autre suivant l'axe d'épaisseur de la plaque. La face interne 21.1 est orientée vers la membrane électrolytique 11, et comporte des premières structurations définissant les canaux de distribution 22a d'une première cellule 2a, et des deuxièmes structurations définissant les canaux de distribution 22b d'une deuxième cellule 2b adjacente à la première cellule 2a. Les canaux de distribution 22a, 22b sont séparés deux à deux par une paroi longitudinale 23 de la plaque isolante 21, dont la face d'extrémité 23.1 est en appui contre une anode 12a, 12b. Les faces d'extrémité 23.1 sont revêtues par un premier ensemble de portions conductrices de contact 24a de la première cellule 2a et par un deuxième ensemble de portions conductrices de contact 24b de la deuxième cellule 2b.

Le premier ensemble de portions conductrices de contact 24a, au contact de la première anode 12a, est relié à une première piste conductrice de polarisation 25a qui s'étend sur la face externe 21.2. La première piste 25a est connectée au premier ensemble de portions conductrices de contact 24a par des premiers vias conducteurs 27a. De manière similaire, le deuxième ensemble de portions conductrices de contact 24b, au contact de la deuxième anode 12b, est relié à la deuxième piste conductrice de polarisation 25b qui s'étend sur la même face externe 21.2. La piste conductrice de polarisation 25b est connectée au deuxième ensemble de portions conductrices de contact 24b par des deuxièmes vias conducteurs 27b. Les première et deuxième pistes conductrices 25a, 25b de polarisation sont électriquement séparées l'une de l'autre.

Ainsi, la même plaque isolante 21 forme des circuits de distribution fluidique 22a, 22, pour les anodes 12a, 12b adjacentes et participe à former une première plaque de maintien 20a adaptée à appliquer un premier potentiel électrique à la première anode 12a, et à former une deuxième plaque de maintien 20b adaptée à appliquer un deuxième potentiel électrique à la deuxième anode 12b éventuellement différent du premier potentiel électrique. Les plaques de maintien 20a, 20b cathodiques qui partagent la même plaque isolante 21 sont identiques ou similaires à ce qui a été décrit relativement aux plaques anodiques.

Les différentes pistes conductrices de polarisation peuvent être électriquement connectées à une ou plusieurs puces de commande, et adaptées à assurer la mise en série ou en parallèle des différentes cellules électrochimiques, permettant ainsi de réguler la puissance électrique délivrée par la pile à combustible.

Des modes de réalisation particuliers viennent d'être décrits. Différentes variantes et modifications apparaîtront à l'homme du métier. Ainsi, les exemples décrits précédemment en référence à une pile à combustible peuvent s'appliquer aux électrolyseurs, en particulier aux électrolyseurs d'eau.

## Revendications

1. Plaque de maintien (20) pour une cellule électrochimique (2) comportant au moins un assemblage membrane électrodes (10) formé d'une anode (12) et d'une cathode (13) séparées l'une de l'autre par une membrane électrolytique (11), la plaque de maintien (20) comportant :
∘ une plaque isolante (21), réalisée en un matériau électriquement isolant, présentant une face interne (21.1) destinée à être orientée vers l'assemblage membrane électrodes (10), et une face externe (21.2) opposée, la face interne présentant des structurations formant des canaux de distribution fluidique (22) séparés deux à deux par une paroi longitudinale (23), les parois longitudinales présentant chacune une face d'extrémité (23.1) destinée à venir au contact de l'assemblage membrane électrodes (10) ;
∘ des portions conductrices de contact (24), réalisées en un matériau électriquement conducteur, s'étendant sur la face d'extrémité (23.1) des parois longitudinales (23) ;
∘ au moins une piste conductrice de polarisation (25), réalisée en un matériau électriquement conducteur, s'étendant sur la face externe de la plaque isolante ;
**caractérisée en ce que** :
∘ elle comporte des orifices traversants (26) s'étendant dans les parois longitudinales (23) et débouchant sur la face d'extrémité (23.1), et des connecteurs électriques (27) s'étendant dans les orifices traversants (26) et reliant chacun une desdites portions conductrices de contact (24) à la piste conductrice de polarisation (25) ;
∘ la plaque isolante (21) étant réalisée en un matériau inactif vis-à-vis d'un milieu aqueux ;
∘ les orifices traversants (26) forment chacun un volume délimité par une face intérieure de la partie isolante, les connecteurs électriques (27) étant au contact de la face intérieure, une portion d'étanchéité (28) étant disposée dans les orifices traversants (26) de manière à les obturer de manière hermétique, le matériau de la portion d'étanchéité (28) étant en un matériau d'étanchéité inactif vis-à-vis du milieu aqueux.

2. Plaque de maintien (20) selon la revendication 1, dans lequel la plaque isolante (21) est réalisée en un matériau choisi parmi le polyimide, les polymères fluorés, le poly(naphtalate d'éthylène) (PEN) et le poly(téréphtalate d'éthylène) (PET).

3. Plaque de maintien (20) selon la revendication 1 ou 2, dans lequel la plaque isolante (21) est réalisée en un matériau choisi parmi le polyimide, le polytétrafluoroéthylène (PTFE), l'éthylène tétrafluoroéthylène (ETFE), l'éthylène propylène fluoré (FEP), le poly(fluorure de vinylidène) (PVDF).

4. Plaque de maintien (20) selon l'une quelconque des revendications 1 à 4, dans laquelle des parties supérieures (29) en un matériau d'étanchéité inactif vis-à-vis du milieu aqueux sont disposées sur la face externe (21.2) de manière à recouvrir chacun un orifice traversant (26).

5. Plaque de maintien (20) selon l'une quelconque des revendications 1 à 4, dans laquelle le matériau d'étanchéité est choisi parmi un polyuréthane et les polymères fluorés.

6. Plaque de maintien (20) selon l'une quelconque des revendications 1 à 5, dans laquelle le matériau d'étanchéité est choisi parmi un polyuréthane, le polytétrafluoroéthylène (PTFE), l'éthylène tétrafluoroéthylène (ETFE), l'éthylène propylène fluoré (FEP), le poly(fluorure de vinylidène) (PVDF).

7. Plaque de maintien (20) selon l'une quelconque des revendications 1 à 6, dans laquelle les portions conductrices de contact (24) situées sur la face d'extrémité (23.1) d'une même paroi longitudinale (23) sont des portions distinctes les unes des autres.

8. Plaque de maintien (20) selon la revendication 7, dans laquelle les portions conductrices de contact (24) d'une même paroi longitudinale (23) présentent une largeur, suivant un axe transversal à l'axe longitudinal de la paroi longitudinale (23), inférieure à la largeur de la paroi longitudinale (23).

9. Plaque de maintien (20) selon l'une quelconque des revendications 1 à 8, dans laquelle, le matériau des conducteurs électriques présentant une conductivité thermique supérieure ou égale à 390W/m.K, la densité surfacique des connecteurs électriques (27) étant comprise entre 1% et 10% de la surface de la membrane électrolytique (11).

10. Cellule électrochimique (2), comportant un assemblage formé d'une anode (12) et d'une cathode (13) séparées l'une de l'autre par une membrane électrolytique (11), et deux plaques de maintien (20), dites anodique et cathodique, selon l'une quelconque des revendications précédentes, la plaque de maintien (20) anodique étant au contact électrique de l'anode (12) et la plaque de maintien (20) cathodique étant au contact de la cathode (13).

11. Générateur électrochimique (1), comportant une pluralité de cellules électrochimiques (2a, 2b) selon la revendication précédente, la même membrane électrolytique (11) étant commune aux assemblages membrane électrodes (10a, 10b) des cellules électrochimiques, ces dernières étant adjacentes les unes aux autres dans le plan de la membrane électrolytique (11), les plaques de maintien (20a, 20b) anodiques comportant la même plaque isolante (21) et les plaques de maintien cathodiques comportant la même plaque isolante (21).
